# EUROPEAN PATENT APPLICATION

(11) **EP 2 560 360 A1**
(43) Date of publication of application: **20.02.2013**
(21) Application number: 12162078.5
(22) Date of filing: 29.03.2012
(51) Int. Cl.: H04N 1/00, H04N 1/40

(54) **Image forming apparatus and control method thereof**

(30) Priority: 18.08.2011 KR 20110082460
(71) Applicant: Samsung Electronics Co., Ltd., Suwon-si, Gyeonggi-do, 443-742 (KR)
(72) Inventor: Lee, Ho-keun, Korea (KR)
(74) Representative: Misselbrook, Paul

(57) **Abstract**

A control method of an image forming apparatus is provided that includes: receiving a user command to perform a document analysis operation; generating scan data by scanning an input document, in response to the user command; setting a predefined menu operation language as the operation language for the document analysis operation, if no operation language is preset; and performing the document analysis operation based on the set operation language.

## Description

### CROSS-REFERENCE TO RELATED APPLICATION

This application claims priority under 35 U.S.C. § 119(a) from Korean Patent Application No. 2011-0082460, filed on August 18, 2011, in the Korean Intellectual Property Office, the contents of which are incorporated herein by reference in its entirety.

### BACKGROUND

### 1. Field

The present general inventive concept relates to an image forming apparatus and a control method thereof.

### 2. Description of the Related Art

Related-art document analysis methods, such as optical character recognition (OCR), target nearly all languages, and thus result in prolonged processing times. For example, in the case of OCR, databases for all languages that may be analyzed may be provided. The matching rate of an input document to each of the languages may be determined in order to search for a language with a highest matching rate with respect to the input document.

In this case, however, it is necessary to compare the input document with all the languages, and thus, it may take a considerable amount of time to process the input document. In such a document analysis method, language properties may often fail to be properly extracted from an input document, which causes a malfunction.

In addition, the orientation of a document may be determined by determining whether the text in the document is aligned from left to right or from right to left. For example, in Korean or a Latin-derived language, text is oriented from left to right, whereas, in Arabic or Hebrew, text is oriented from right to left. As such, the alignment of text may be used to differentiate between languages.

The orientation of a document may be determined by drawing two reference lines that partition a line of text into three sections, and then calculating the distribution ratio of characters or segments of characters in each of the three sections. In this method, however, since the distribution ratio of characters or segments of characters between the three sections of each line may vary from one language to another language, an incorrect language may be selected..

### SUMMARY

The present general inventive concept provides an image forming apparatus that uses a menu operation language as an operation language for performing a document analysis operation, and a control method thereof.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing a control method of an image forming apparatus, the control method including: receiving a user command to perform a document analysis operation; generating scan data by scanning an input document, in response to the user command; setting a predefined menu operation language as the operation language for the document analysis operation, if no operation language has been preset; extracting one or more characters from the scan data and converting the extracted characters based on the set operation language; and adjusting the alignment of the scan data by rotating the scan data, if the alignment of the scan data is inconsistent with the alignment of the set operation language.

The adjusting of the alignment may include: determining the justification of one or more lines of the extracted characters; comparing the determined justification with the justification of in the set operation language; and rotating the scan data based on the result of the comparison.

The adjusting of the alignment may include: calculating a partition ratio of one or more lines of the extracted characters, which is a ratio of the distribution of the extracted characters or segments of the extracted characters between a plurality of sections obtained by partitioning the sentence; comparing the calculated partition ratio with a partition ratio of the set operation language; and rotating the scan data based on the results of the comparison.

The foregoing and/or other features and utilities of the present general inventive concept may also be achieved by providing a control method of an image forming apparatus, the method including: receiving a user command to perform a document analysis operation; generating scan data by scanning an input document, in response to the user command; setting a predefined menu operation language as the operation language for the document analysis operation, if no operation language has been preset; and performing the document analysis operation based on the set operation language.

The document analysis operation may include at least one of an OCR operation and a document orientation alignment operation.

The performing of the document analysis operation may include: extracting one or more characters from the scan data; and converting the extracted characters based on the set operation language.

The performing of the document analysis operation may include: determining the justification of lines of the characters; comparing the determined justification with the justification of the set operation language; and rotating the scan data based on the results of the comparison.

The performing of the document analysis operation may include: calculating a partition ratio of one or more lines of the extracted characters, which is a ratio of the distribution of the extracted characters or segments of the extracted characters between a plurality of sections obtained by partitioning the sentence; comparing the calculated partition ratio with the partition ratio of the set operation language; and rotating the scan data based on the results of the comparison.

The predefined menu operation language may be a language of a default setting of the image forming apparatus or may be a language set by a user setting.

The foregoing and/or other features and utilities of the present general inventive concept may also be achieved by providing an image forming apparatus, including: a user interface unit to receive a user command to perform a document analysis operation; an image reading unit that generates scan data by scanning an input document, in response to the user command; a document analysis unit that performs the document analysis operation on the scan data; and a control unit that sets a predefined menu operation language as the operation language for the document analysis operation, if no operation language is preset, and controls the document analysis unit to extract one or more characters from the scan data, to convert the extracted characters based on the set operation language, and to rotate the scan data based on the alignment of the set operation language.

The document analysis unit may include: an alignment pattern analyzer that determines the alignment of one or more lines of the extracted characters; an alignment pattern comparator that compares the determined alignment with the alignment of the set operation language; and a document rotator that rotates the scan data, based on the results of the comparison.

The document analysis unit may include: a character extractor that extracts one or more characters from the scan data; a partition ratio calculator that calculates a partition ratio of one or more lines of the extracted characters, the partition ratio being a ratio of the distribution of the extracted characters or segments of the extracted characters, between a plurality of sections obtained by partitioning the one or more lines; a partition ratio comparator that compares the calculated partition ratio with the partition ratio of the set operation language; and a document rotator that rotates the scan data based on the results of the comparison.

The foregoing and/or other features and utilities of the present general inventive concept may also be achieved by providing an image forming apparatus including: a user interface unit that receives a user command to perform a document analysis operation; an image reading unit that generates scan data by scanning an input document in response to the user command; a document analysis unit that performs the document analysis operation on the scan data; and a control unit that sets a predefined menu operation language as the operation language for the document analysis operation, if no operation language is preset, and controls the document analysis unit to perform the document analysis operation using on the set operation language.

The document analysis operation may include at least one of an OCR operation and a document orientation alignment operation.

The document analysis unit may include: a character extractor that extracts one or more characters from the scan data; and a character converter that converts the extracted characters based on the set operation language.

The document analysis unit may include: an alignment pattern analyzer that determines the alignment of one or more lines of the extracted characters; an alignment pattern comparator that compares the determined alignment pattern with the alignment pattern of the set operation language; and a document rotator that rotates the scan data based on the results of the comparison.

The document analysis unit may include: a character extractor that extracts one or more characters from the scan data; a partition ratio calculator that calculates a partition ratio of a line of the extracted characters, the partition ratio being a ratio of the distribution of the extracted characters or segments of the extracted characters, between a plurality of sections obtained by partitioning the sentence; a partition ratio comparator that compares the calculated partition ratio with the partition ratio of the set operation language; and a document rotator that rotates the scan data based on the results of the comparison.

The predefined menu operation language may include a language of a default setting of the image forming apparatus or a language set by a user setting.

The foregoing and/or other features and utilities of the present general inventive concept may also be achieved by providing a recording medium having recorded thereon a program for executing the control method of the image forming apparatus.

Therefore, it is possible to improve the speed and precision of a document analysis operation.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a block diagram of an image forming apparatus, according to an exemplary embodiment of the present inventive concept;

FIGS. 2A to 2C are block diagrams illustrating examples of a document analysis unit illustrated in FIG. 1;

FIGS. 3A to 3C are diagrams illustrating examples of various document analysis tasks performed by the document analysis units illustrated in FIGS. 2A to 2C;

FIG. 4 is a flowchart illustrating a control method of an image forming apparatus, according to an embodiment of the present inventive concept;

FIG. 5 is a flowchart illustrating a document analysis method, according to an exemplary embodiment of the present inventive concept;

FIG. 6 is a flowchart illustrating a document analysis method, according to another exemplary embodiment of the present inventive concept; and

FIG. 7 is a flowchart illustrating a document analysis method, according to another exemplary embodiment of the present inventive concept.

FIG. 8 is a flow chart illustrating a control method of an image forming apparatus according to an exemplary embodiment.

### DETAILED DESCRIPTION OF THE EXEMPLARY EMBODIMENTS

Reference will now be made in detail to the exemplary embodiments of the present general inventive concept, examples of which are illustrated in the accompanying drawings, wherein like reference numerals refer to the like elements throughout. The embodiments are described below in order to explain the present general inventive concept by referring to the figures.

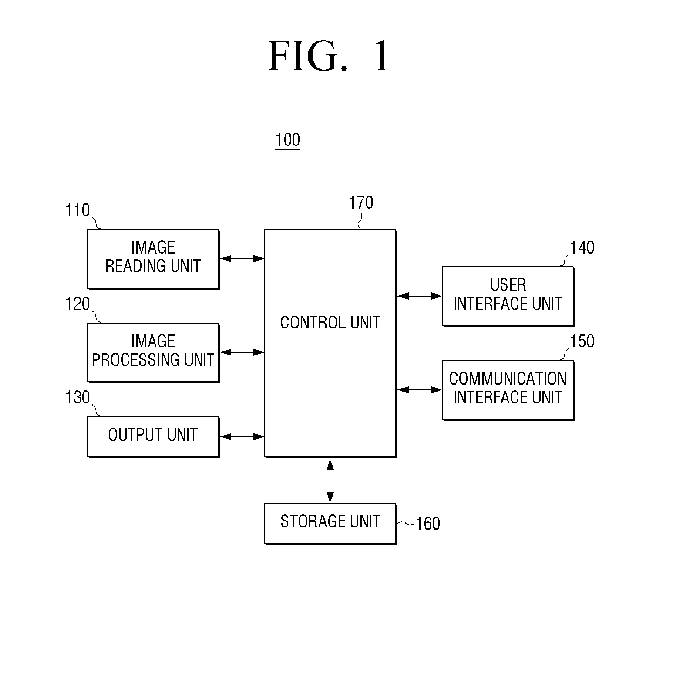

FIG. 1 is a block diagram of an image forming apparatus 100, according to an exemplary embodiment of the present inventive concept. Referring to FIG. 1, the image forming apparatus 100 may be implemented as various devices that may be connected to an external device and that output document data, such as a printer, a scanner, a copier, a facsimile printer, a multifunctional device with at least two of the printer, scanner, copier, and facsimile functions, and the like.

The image forming apparatus 100 includes an image reading unit 110, an image processing unit 120, an output unit 130, a user interface unit 140, a communication interface unit 150, a storage unit 160, and a control unit 170. The image reading unit 110 may read an input document using an image sensor. The image reading unit 110 may scan the input document in response to a user command, thereby generating scan data. The image reading unit 110 may be implemented as a scan module (not shown) that performs a scan operation.

The scan module may perform a scan operation under the control of the control unit 170. The scan module may include a sensor (not shown), a motor (not shown), a position sensor (not shown), and a scan controller (not shown). The image sensor may include a contact image sensor (CIS) that obtains red (R), green (G), and blue (B) values from an image by sensing the image. The image sensor may transmit the R, G, and B values to the scan controller. The motor may transfer the input document in a scan direction so that R, G, and B values of the input document may be sensed in units of lines.

The position sensor may sense the position of the input document in the image forming apparatus 100, and may transmit the results of the sensing to the scan controller. The scan controller may control the image sensor, the motor, and the position sensor in response to the receipt of a scan command from the control unit 170, to perform a scan operation. That is, the scan controller may combine the R, G, and B values provided by the image sensor, thereby generating image data corresponding to an image of the input document.

The document analysis unit 120 may perform document analysis on scan data generated by the image reading unit 110. More specifically, the document analysis unit 120 may perform at least one of an optical character recognition (OCR) operation and a document orientation determination operation, on the scan data. The output unit 130 may output data provided by the document analysis unit 120 to a recording medium under the control of the control unit 170.

For example, in a case in which the image forming apparatus 100 is a laser-type image forming apparatus, the surface of an organic photoconductor (OPC) may be charged by a charge unit (not shown), and a latent image may be formed on the charged surface of the OPC by a laser scanning unit (LSU, not shown). The latent image may be developed by a developing unit (not shown), so that toner may be attached onto the latent image and then transferred onto paper by a transfer unit (not shown). The toner may be fixed to the paper by a fixing unit (not shown). However, the present inventive concept is not limited to any particular method of outputting the data provided by the document analysis unit 120. For example, the image forming apparatus 100 may be applied to an inkjet-type image forming apparatus. The data provided by the document analysis unit 120 may be stored in the storage unit 160, in a predetermined format, under the control of the control unit 170.

The user interface unit 140 may include a manipulation key (not shown) to enter a user command to control the operation of the image forming apparatus 100 and a display window (not shown) (such as, for example, a liquid crystal display (LCD)) to display the state of the image forming apparatus 100. The user interface unit 140 may be capable of realizing both the input and output of data, such as, for example, a touchpad.

The user interface unit 140 may display various information provided by the image forming apparatus 100 and the progress and the results of any job performed by the image forming apparatus 100. A user may identify various printing jobs performed by the image forming apparatus 100 by using the user interface unit 140. A user may manage and control the image forming apparatus 100 using the user interface unit 140. The user interface unit 140 may be used to input a user command to analyze a document.

The communication interface unit 150 may support data communication with an external device (not shown) via a network. For example, the communication interface unit 150 may be configured to support a Digital Living Network Alliance (DLNA) network, a local network, a local area network (LAN), an internet network, and the like.

The storage unit 160 may be implemented as an internal storage medium installed in the image forming apparatus 100 or as an external storage medium such as, for example, a removable disc (including a universal serial bus (USB) memory), a storage medium connected to a host, a web server connected to a network, or the like.

The storage unit 160 may store various data used by the document analysis unit 120 to perform a document analysis operation. For example, the storage unit 160 may store character information for each language, character alignment information for each language, a menu operation language set for providing a menu, and an operation language set for a document analysis operation.

The control unit 170 may control the operation of each element of the image forming apparatus 100. For example, the control unit 170 may receive an 'analyze document' command via the user interface unit 150, and may control the image reading unit 110, the document analysis unit 120, and the output unit 130, to perform a document analysis operation.

In a case when there are no specific user settings regarding an operation language in which to perform a document analysis operation, the control unit 170 may set a predefined menu operation language as an operation language for a document analysis operation. In other words, the control unit 170 may set the operation language to be the same as the language used in a menu of the user interface unit 140, if no operation language is preset by, for example, a user. Herein, the term 'menu operation language' indicates an operation language used by the image forming apparatus 100 to provide various menus.

The control unit 170 may control the document analysis unit 120 to perform a document analysis operation, using the set operation language. In the example illustrated in FIG. 1, a document analysis operation may be controlled by the image forming apparatus 100. In another non-limiting example, a document analysis operation and other operations performed by the image forming apparatus 100 may be controlled by a printer driver (not shown) or an application (not shown) included in a host device (not shown) to which the image forming apparatus 100 is connected.

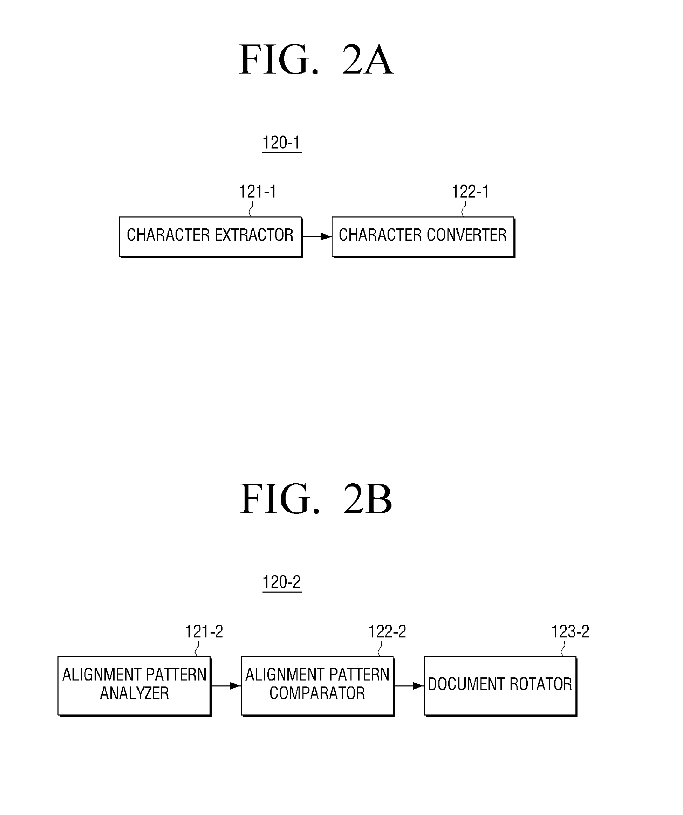

FIGS. 2A to 2C are block diagrams of examples of the document analysis unit 120. FIG. 2A illustrates an example of the document analysis unit 120, i.e., a document analysis unit 120-1.

Referring to FIG. 2A, the document analysis unit 120-1 includes a character extractor 121-1 and a character converter 122-1. The document analysis unit 120-1 may perform an OCR operation in response to a user command.

The character extractor 121-1 may extract one or more characters from scan data generated by the image reading unit 110. In a case in which no specific language has been set for an OCR operation, the character converter 122-1 may convert the extracted characters based on a predefined menu operation language. For example, the character converter 122-1 may calculate the matching rate of the extracted characters to each language by applying previously-stored matching properties for each language to the extracted characters, and may convert the extracted characters based on a language having a highest matching rate to the extracted characters.

FIG. 2B illustrates another example of the document analysis unit 120, i.e., a document analysis unit 120-2. Referring to FIG. 2B, the document analysis unit 120-2 includes an alignment pattern analyzer 121-2, an alignment pattern comparator 122-2, and a document rotator 123-2. The document analysis unit 120-2 may perform a document orientation alignment operation in response to a user command.

The alignment pattern analyzer 121-2 may determine the alignment (justification) of one or more lines of text of scan data with respect to the margins of the scan data. For example, the alignment pattern analyzer 121-2 may extract one or more characters from the scan data, may identify one or more lines of the extracted characters, and may determine the alignment of the lines. For example, the alignment of the lines may be one of a left-to-right alignment, a right-to-left alignment, and a center alignment. In other words, the lines may be left, right, or center justified.

In a case in which no operation language has been preset for a document orientation alignment operation, the alignment pattern comparator 122-2 may compare the alignment determined by the alignment pattern analyzer with the alignment of a predefined menu operation language.

The document rotator 122-2 may rotate the scan data based on the results of the comparison performed by the alignment pattern comparator 122-2. For example, the document rotator 122-2 may rotate and thus realign the scan data, if the results of the comparison performed by the alignment pattern comparator 122-2 indicate that the alignment of the scan data is not the same as the alignment of the predefined menu operation language.

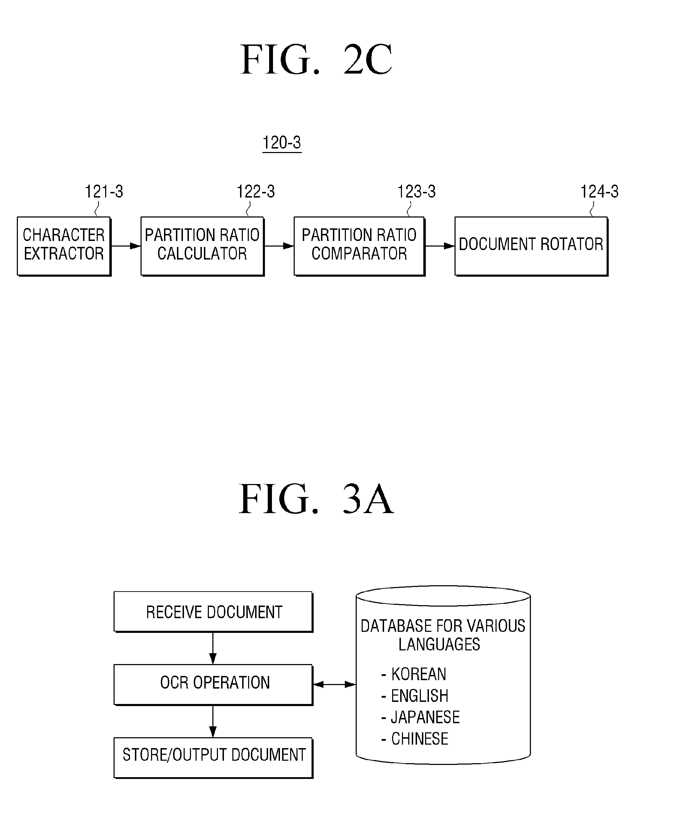

FIG. 2C illustrates another example of the document analysis unit 120, i.e., a document analysis unit 120-3. Referring to FIG. 2C, the document analysis unit 120-2 includes a character extractor 121-3, a partition ratio calculator 122-3, a partition ratio comparator 123-3, and a document rotator 124-3. The document analysis unit 120-3 may perform a document orientation alignment operation in response to a user command.

The character extractor 121-3 may extract one or more characters from scan data generated by the image reading unit 110. The partition ratio calculator 122-3 may identify a line of text based on the extracted characters, and may calculate the partition ratio of the line. Herein, the term 'partition ratio' indicates the ratio of the distribution of characters or segments thereof between sections obtained by partitioning the line. When no language has been preset for a document orientation alignment operation, the partition ratio comparator 123-3 may compare the calculated partition ratio with the partition ratio of a predefined menu operation language.

The document rotator 124-3 may rotate the scan data based on the results of the comparison performed by the partition ratio comparator 123-3. For example, in a case in which the results of the comparison indicate that the calculated partition ratio is not the same as the partition ratio of the predefined menu operation language, the document rotator 124-3 may rotate and thus realign the scan data.

FIGS. 3A to 3C are diagrams illustrating examples of various document analysis operations that may be performed by the document analysis units 120-1, 120-2, and 120-3 of FIGS. 2A, 2B, and 2C. FIG. 3A illustrates an example of an OCR operation.

Referring to FIG. 3A, one or more databases may be built based on information regarding each of the languages that may be analyzed. An OCR operation may be performed by determining the matching rate of an input document to each language with reference to the databases. If there are no language settings for an OCR operation, an OCR operation may be performed based on a menu operation language.

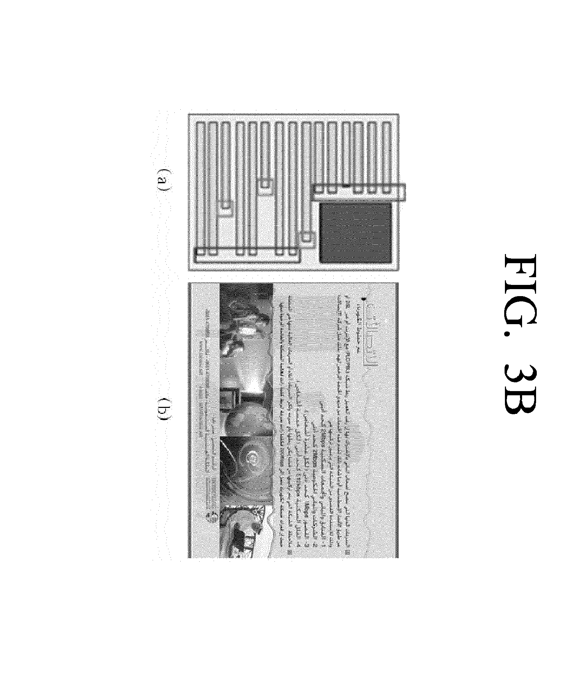

FIG. 3B illustrates an example of a document orientation alignment operation. Referring to FIG. 3B(a), in Korean or a Latin-derived language, sentences may be oriented from left to right (left justified). On the other hand, referring to FIG. 3B(b), in Arabic or Hebrew, sentences may be oriented from right to left (right justified).

Therefore, in order to determine a proper alignment of a document, an operation language should first be set. For example, in a case in which no language is preset for a document orientation alignment operation, a document orientation alignment operation may be performed using a menu operation language.

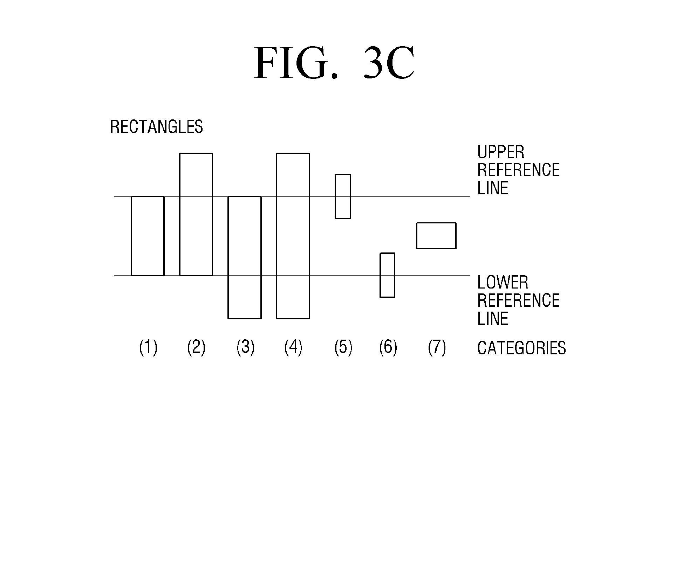

FIG. 3C illustrates another example of a document orientation alignment operation. Referring to FIG. 3C, two reference lines (i.e., upper and lower reference lines) are drawn to partition a line of text into three sections (i.e., upper, middle, and lower sections). The orientation of the input document may be determined based on the ratio of the distribution of characters or segments of characters between at least two of the three sections, i.e., a partition ratio may be calculated.

The partition ratio may be almost uniform for most Latin-derived languages, but may vastly vary between Latin-derived languages and non-Latin-derived languages, such as, for example, Korean, Japanese, Chinese, or the like. Therefore, an operation language may be set separately. When no language is preset for a document orientation alignment operation, a document orientation alignment operation may be performed using a menu operation language.

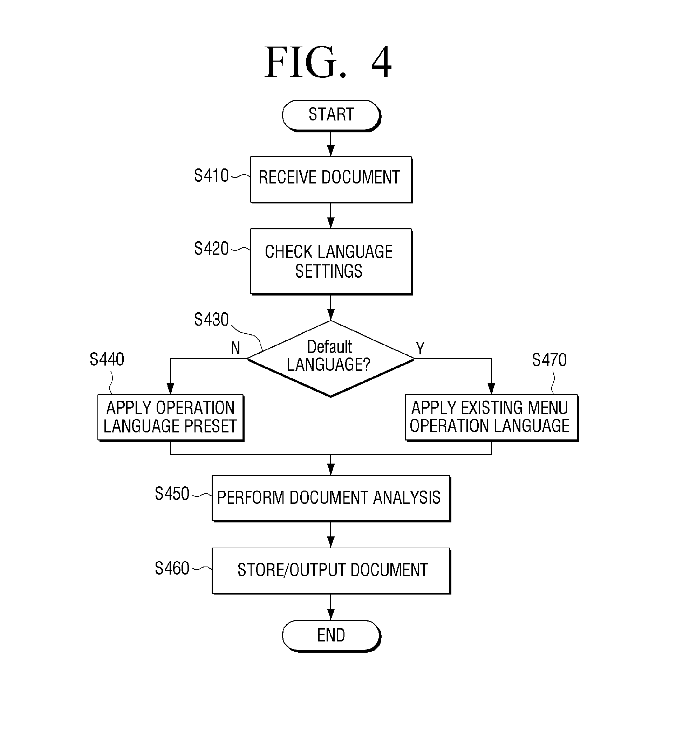

FIG. 4 is a flowchart illustrating a control method of an image forming apparatus, according to an exemplary embodiment of the present inventive concept. Referring to FIG. 4, a document is input in conjunction with a document analysis operation command (S41 0). A determination may be made as to whether an operation language has been set in advance for a document analysis operation (S420). The input document may be a scan image obtained by an RGB sensor, and may be an RGB image or a monochromatic image. The document analysis operation command may include a command to perform an OCR operation and/or a command to perform a document orientation alignment operation.

If a language preset for the document analysis operation is not a default language (S430:N), i.e., if the document analysis operation is preset to use a non-default language, the preset language is set as the operation language to perform the document analysis operation on the input document (S440).

If the language set for the document analysis operation is a default language (S430:Y), i.e., if no specific language has been preset for the document analysis operation, a menu operation language may be set as the operation language to perform the document analysis operation (S470). In other words, the menu operation language may be the default language, which may be set as the operation language for the document analysis operation.

The document analysis operation may be performed using the operation language set in operations S440 or S470 (S450). One or more characters obtained by the document analysis operation may be stored or output (S460). For example, a document obtained by performing an OCR operation on the input document and/or by rotating the input document may be stored and/or output.

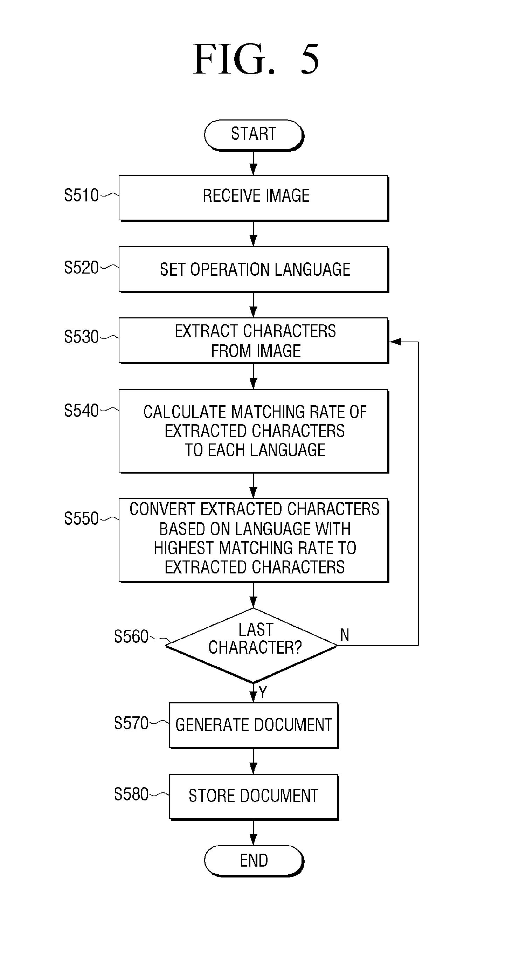

FIG. 5 is a flowchart illustrating a document analysis method according to an exemplary embodiment of the present inventive concept. Referring to FIG. 5, in response to the receipt of a scan image of an input document (S51 0), an operation language to perform an OCR operation may be set in the manner described above with reference to FIG. 4 (S520).

One or more characters may be extracted from the scan image (S530). Matching may be performed between the extracted characters and the characters of the operation language set in operation S520 (S540). In the case of an OCR operation that applies multiple language settings, the matching rates of the extracted characters to databases for different languages may be calculated. The extracted characters may be converted based on a language with a highest matching rate to the extracted characters (S550). When the conversion of all the extracted characters is determined to be complete (S560), a document including the converted characters may be generated (S570). The the generated document may then be stored (S580).

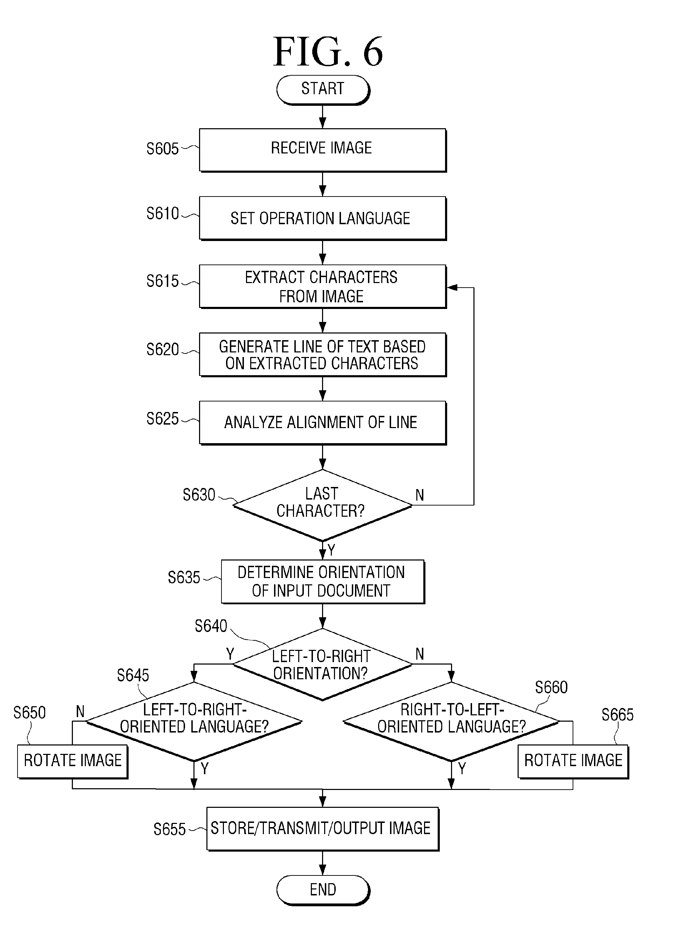

FIG. 6 is a flowchart illustrating a document analysis method according to another exemplary embodiment of the present inventive concept. Referring to FIG. 6, in response to the receipt of a scan image of an input document (S605), an operation language to perform a document orientation alignment operation may be set in the manner described above with reference to FIG. 4 (S610).

One or more characters may be extracted from the scan image (S615). One or more sentences may be generated based on the extracted characters (S620). The orientation of each of the sentences may be analyzed (S625). When the analysis of the orientation of all the sentences is completed (S630), the orientation (alignment/justification) of the input document may be determined (S635).

If the orientation of the input document is determined to be a left-to-right orientation (left justified) (S640:Y), a determination is made as to whether the operation language set in operation S61 0 supports the left-to-right document orientation (S645:Y). If so, the scan image of the input document may be stored, transmitted, and/or output without being rotated (S655).

In a case in which the orientation of the input document is left-to-right orientation (right justified) (S640:Y) and the operation language set in operation S610 does not have a left-to-right document orientation (S645:N), the scan image of the input document may be rotated by 180 degrees (S650). The rotated scan image may then be stored, transmitted, and/or output (S655).

In a case in which the orientation of the input document is oriented right-to-left (S640:N) and the operation language set in S61 0 has a right-to-left document orientation (S660:Y), the scan image of the input document may be stored, transmitted, and/or output, without being rotated (S655).

In a case in which t the input document has a right-to-left orientation (S640:N) and the operation language set in operation S610 does not have a right-to-left document orientation (S660:N), the scan image of the input document may be rotated by 180 degrees (S665). The rotated scan image may then be stored, transmitted, and/or output (S655).

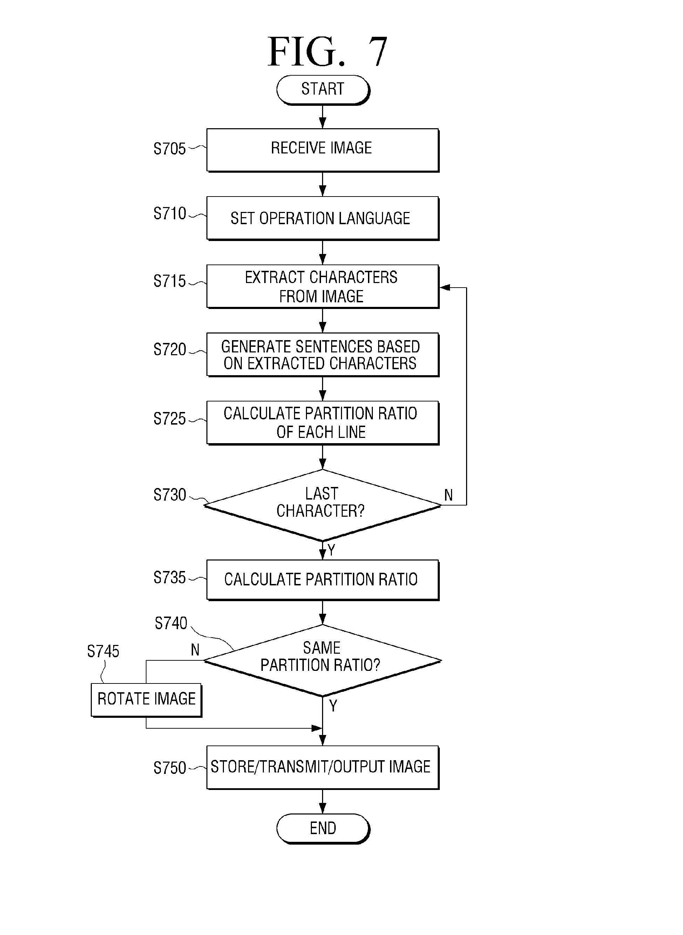

FIG. 7 is a flowchart illustrating a document analysis method according to another exemplary embodiment of the present inventive concept. Referring to FIG. 7, in response to the receipt of a scan image of an input document (S705), an operation language to perform a document orientation alignment operation may be set in the manner described above with reference to FIG. 4 (S710).

One or more characters may be extracted from the scan image (S715). A line of text may be generated using the extracted characters (S720). The partition ratio of the line may be calculated (S725). In a case in which the calculation of the partition ratios of all generated lines based on all characters extractable from the scan image is complete (S730), a determination may be made as to whether the input document has the same partition ratio as the operation language set in operation S710 (S740).

In response to the input document having the same partition ratio as the operation language set in S710 (S740:Y), the scan image of the input document may be stored, transmitted, or output without being rotated (S750). On the other hand, in response to the input document not having the same partition ratio as the operation language set in S710 (S740:N), the scan image of the input document may be rotated by 180 degrees (S745). The rotated scan image may then be stored, transmitted, and/or output (S750).

For example, in a case in which the operation language set in operation S71 0 is a Latin-derived language having a partition ratio of 1:5:4, and the upper and lower sections of each line have character distribution ratios of 10% and 40%, respectively, it may be determined that the input document has the same partition ratio as the operation language set in operation S710. In this case, the input document may be stored, transmitted, and/or output, without being rotated.

On the other hand, in a case in which the upper and lower sections of each line have character distribution ratios of 40% and 10%, respectively, it may be determined that the input document is upside down. In this case, the input document may be rotated by 180 degrees. Then the rotated document may be stored, transmitted, and/or output.

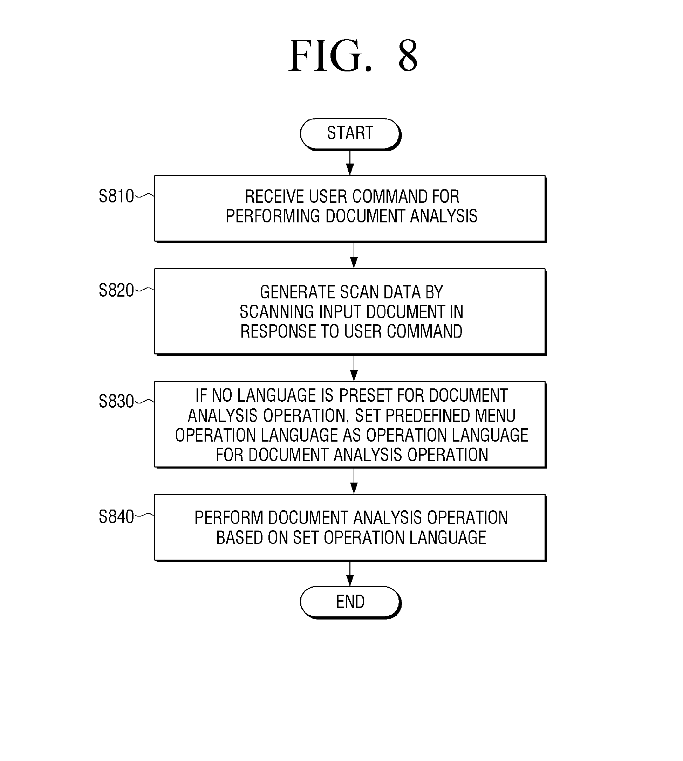

FIG. 8 is a flowchart illustrating a control method of an image forming apparatus, according to an exemplary embodiment of the present inventive concept. Referring to FIG. 8, in response to the receipt of a user command to perform a document analysis operation (S810), scan data may be generated by scanning an input document (S820).

If no language is preset for the document analysis operation, a predefined menu operation language may be set as an operation language for the document analysis operation (S830). The predefined menu operation language may be a language selected by a default setting or a user setting.

The document analysis operation may be performed using the operation language set in operation S830 (S840). The document analysis operation may include an OCR operation and/or a document orientation alignment operation. For example, in operation S840, one or more characters may be extracted from the scan data, and the extracted characters may be converted based on the operation language set in operation S830.

In the alternative, in operation S840, in response to the receipt of a user command for performing a document orientation alignment operation, the alignment of one or more lines of text of the scan data (with respect to the margins of a text portion where no images are displayed) may be compared with the alignment of the operation language set in operation S830. The scan data may be rotated based on the results of the comparison.

In another alternative, in operation S840, one or more characters may be extracted from the scan data, a line of text may be generated based on the extracted characters, the partition ratio of the line may be calculated, and the calculated partition ratio may be compared with the partition ratio of the operation language set in operation S830. The scan data may be rotated based on the results of the comparison.

The examples illustrated in FIGS. 1 to 8 have been described above, taking an OCR operation and a document orientation alignment operation as examples of document analysis operations. However, there is no restriction as to the type of document analysis operations to which the examples illustrated in FIGS. 1 to 8 can be applied. Therefore, the examples illustrated in FIGS. 1 to 8 can be applied to nearly all types of document analysis operations or methods that are related to language settings for regular menus.

As described above, it is possible to facilitate the setting of a basic operation language for a document analysis function and thus to improve the speed and precision of a document analysis operation.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A control method of an image forming apparatus, comprising:
receiving a user command for performing a document analysis operation;
generating scan data by scanning an input document in response to the user command;
in a case in which there are no specific user settings regarding an operation language for the document analysis operation, setting a predefined menu operation language as the operation language for the document analysis operation; and
performing the document analysis operation based on the set operation language.

2. The control method of claim 1, wherein the document analysis operation includes at least one of an OCR operation and a document orientation alignment operation.

3. The control method of claim 2, wherein the performing comprises:
in response to the document analysis operation being the OCR operation, extracting one or more characters from the scan data; and
converting the extracted characters based on the set operation language.

4. The control method of claim 2, wherein the performing comprises:
in response to the document analysis operation being the document orientation alignment operation, analyzing a pattern of the alignment of one or more sentences in a text portion of the scan data to margins of the text portion where no images are displayed;
comparing the analyzed alignment pattern with a pattern of the alignment of text in the set operation language; and
rotating the scan data based on the results of the comparing.

5. The control method of claim 2, wherein the performing comprises:
in response to the document analysis operation being the document orientation alignment operation, extracting one or more characters from the scan data;
generating a sentence based on the extracted characters and calculating a partition ratio of the sentence, which is a distribution ratio of the extracted characters or segments of the extracted characters between a plurality of sections obtained by partitioning the sentence;
comparing the calculated partition ratio with a partition ratio of text in the set operation language; and
rotating the scan data based on the results of the comparing.

6. The control method of any one of claims 1 to 5, wherein the predefined menu operation language includes a language set by a default setting at a time of the manufacture of the image forming apparatus or a language set by a user setting.

7. An image forming apparatus, comprising:
a user interface unit which receives a user command for performing a document analysis operation;
an image reading unit which generates scan data by scanning an input document in response to the user command;
a document analysis unit which performs the document analysis operation on the scan data; and
a control unit which, in a case in which there are no specific user settings regarding an operation language for the document analysis operation, sets a predefined menu operation language as the operation language for the document analysis operation and controls the document analysis unit to perform the document analysis operation based on the set operation language.

8. The image forming apparatus of claim 7, wherein the document analysis operation includes at least one of an OCR operation and a document orientation alignment operation.

9. The image forming apparatus of claim 8, wherein the document analysis unit comprises:
a character extractor which, in response to the document analysis operation being the OCR operation, extracts one or more characters from the scan data; and
a character converter which converts the extracted characters based on the set operation language.

10. The image forming apparatus of claim 8, wherein the document analysis unit comprises:
an alignment pattern analyzer which, in response to the document analysis operation being the document orientation alignment operation, analyzes a pattern of the alignment of one or more sentences in a text portion of the scan data to margins of the text portion where no images are displayed;
an alignment pattern comparator which compares the analyzed alignment pattern with a pattern of the alignment of text in the set operation language; and
a document rotator which rotates the scan data based on the results of the comparison performed by the alignment pattern comparator.

11. The image forming apparatus of claim 8, wherein the document analysis unit comprises:
a character extractor which, in response to the document analysis operation being the document orientation alignment operation, extracts one or more characters from the scan data;
a partition ratio calculator which generates a sentence based on the extracted characters and calculates a partition ratio of the sentence, the partition ratio being a distribution ratio of the extracted characters or segments of the extracted characters between a plurality of sections obtained by partitioning the sentence;
a partition ratio comparator which compares the calculated partition ratio with a partition ratio of text in the set operation language; and
a document rotator which rotates the scan data based on the results of the comparison performed by the partition ratio comparator.

12. The image forming apparatus of claim 7, wherein the predefined menu operation language includes a language set by a default setting at a time of the manufacture of the image forming apparatus or a language set by a user setting.

13. A recording medium having recorded thereon a program for executing a control method of an image forming apparatus, the control method comprising:
receiving a user command for performing a document analysis operation;
generating scan data by scanning an input document in response to the user command;
in a case in which there are no specific user settings regarding an operation language for the document analysis operation, setting a predefined menu operation language as the operation language for the document analysis operation; and
performing the document analysis operation by extracting one or more characters from the scan data and converting the extracted characters based on the set operation language in response to the document analysis operation being an OCR operation, and by rotating the scan data based on the set operation language in response to the document analysis operation being a document orientation alignment operation.

14. The recording medium of claim 13, wherein the document analysis operation includes at least one of an OCR operation and a document orientation alignment operation.

15. The recording medium of claim 14, wherein the performing comprises:
in response to the document analysis operation being the document orientation alignment operation, analyzing a pattern of the alignment of one or more sentences in a text portion of the scan data to margins of the text portion where no images are displayed;
comparing the analyzed alignment pattern with a pattern of the alignment of text in the set operation language; and
rotating the scan data based on the results of the comparing.
